# EUROPEAN PATENT SPECIFICATION

(11) **EP 3 492 688 B1**
(45) Date of publication and mention of the grant of the patent: **04.11.2020**
(21) Application number: 17833121.1
(22) Date of filing: 03.07.2017
(51) Int. Cl.: E06C 7/48, E06C 7/50, E06C 7/18, E06C 1/36

(54) **ARRANGEMENT INTRODUCED IN A DEVICE HAVING A HOOK FOR ANCHORING A LADDER TO CABLES**
ANORDNUNG IN EINER VORRICHTUNG MIT EINEM HAKEN ZUR VERANKERUNG EINER LEITER AN SEILEN
AGENCEMENT DESTINÉ À UN ÉQUIPEMENT AVEC CROCHET POUR L'ANCRAGE D'UNE ÉCHELLE SUR DES CÂBLES

(30) Priority: 28.07.2016 BR 202016017621 U
(43) Date of publication of application: 05.06.2019
(73) Proprietor: Lesser Levy, Jacques, 05445-30 São Paulo - SP (BR)
(72) Inventor: Lesser Levy, Jacques, 05445-30 São Paulo - SP (BR)
(74) Representative: Urizar Anasagasti, Jesus Maria
(86) International application number: PCT/BR2017/050172
(87) International publication number: WO 2018/018116

(56) References cited:
- EP-A1- 0 771 931
- AU-A1- 2014 277 621
- GB-A- 2 476 283
- GB-A- 2 476 283
- US-A- 1 030 905
- US-A- 3 941 341
- US-A- 5 054 581
- US-A- 5 054 581
- US-A1- 2005 284 703
- US-A1- 2010 326 768
- US-A1- 2010 326 768
- US-A1- 2014 367 194
- US-A1- 2014 367 194
- US-A1- 2015 075 905

## Description

### FIELD OF THE INVENTION

The purpose of this utility model patent is an improvement in rope ladder anchoring equipment, which is in the field of occupational safety equipment. Such ladder anchoring equipment comprises a mechanism to be coupled between two steps of the service ladder and is provided with a hinged hook, the function of which is to tenaciously attach a ladder to a horizontal cable, be it electric power, telephony, steel cable, or the like, with the purpose of avoiding the movement of the ladder, which would cause the worker to fall, as well as to safeguard the worker from a fatal fall due to sudden illness, and to which original constructive layout was given, aiming to improve its performance compared to other models commonly offered on the market. The purpose of this patent application is an improvement aiming to prevent unintentional sideways movement of the device incorporating the hinged hook and also to prevent the hook itself from inadvertently moving during its use as not to release the cable through which the ladder is supported.

It is therefore a perfectly developed and efficient model in order to offer safety equipment with hook for anchoring ladders to cables, providing great reliability with respect to its function, both for its functional characteristics and for the durability of the product.

### BACKGROUND OF THE INVENTION

As is known, by the experts in the field, in the services of aerial installations of electric power, telephony, fiber optics and the like, in many cases, the service ladders must be supported in their own cables and/or steel cables, between the utility poles.

For such, service ladders can be equipped with devices provided with hinged hooks, which are mounted between two ladder steps.

More precisely in the usual way, such a device consists of a vertical frame, provided with an expansive axis, the ends of which are equipped with supports, which are coupled to the steps of the ladder and pressed against them as a result of the expansion of such axis. Said frame is provided with a hinged hook, the function of which is to attach to the cable.

The ladder is supported on the rope and the hinged hook is moved in order to grip the rope from below upwards by intermeshing it with one another and the vertical frame, and for this end, at the other end of the hook, a rope is attached, which is drawn so that the hook moves against the vertical frame and then the other end is attached at a further down point of the ladder.

In spite of the great utility of this safety device, there are some conditions that can compromise its functionality, putting the users of the service ladders supported on cables in condition of risk.

One such condition is the possibility of the hook-type safety device to move sideways and destabilize the ladder, causing the user to fall.

There is no locking apparatus on the market that prevents the transverse movement of the hook-type safety device on the steps of the ladder, and such sideways movement may cause the safety equipment to be uncoupled from the ladder.

Another risky situation is the possibility of the rope fastening the hook to untie from its tying point, causing the hook to be released from the support cable. In this case, the ladder is loose, only supported on the cable.

There is at present no safety system preventing improper opening of the hook.

The document GB2476283 describes a device secures a ladder to a scaffold tube or similar horizontal member 19. The device includes a scaffold securing arrangement having a first fixed hook and a second hook rotatable between a downwards facing open position and a closed position. The device is also engageable with a ladder, preferably via a sub-assembly that is slidably connected by a tenon and guide-way to the scaffold securing arrangement. The device is adjustable in length to facilitate positioning of the ladder to the recommended angle of inclination. The ladder engaging sub-assembly may comprise a threaded adjuster to secure the device to the ladder.

### SUMMARY OF THE INVENTION

It was in the light of these drawbacks that, after numerous researches and studies, the inventor, a person related to the field, created and developed the object of this patent, idealizing the hook-type device for ladder anchorage in cables for which not only the mechanical and functional qualities were considered in the design of manufacture, but also the shape, layout and location of their parts and components that when correctly positioned brought an increase of efficiency without incurring any burden.

Thus, this invention has been designed to provide an improvement as a result of hooks for ladder anchorage in cables, so that the device performs its functions with unmatched efficiency and versatility without the drawbacks aforementioned.

In this invention an improvement in the safety device for service ladders to aerial cables is introduced, allowing total safety to its users.

The configuration of the device, object of this patent, in its new constructive form, comprises a rope grip, which ensures that the safety hook remains closed regardless of the action of the worker together with a device installed on the step locking the safety equipment sideways and preventing its lateral movement. Each of these latches is divided into two parts in semicircular shape and are installed on the ladder step by means of self-locking screws and nuts.

It is thus understood that the device in question is extremely simple in its constructive arrangement and therefore easy to implement, achieving excellent practical and functional results by offering an innovative constructive arrangement in comparison with known models. Idealized with innovative design, it results in a harmonic set of a very peculiar and above all characteristic aspect, which stands out, in addition to the constructive aspect, for its versatility and convenience of use.

### DESCRIPTION OF THE DRAWINGS

Next, for a better understanding and comprehension of the device the attached illustrative drawings are shown where the following is observed:

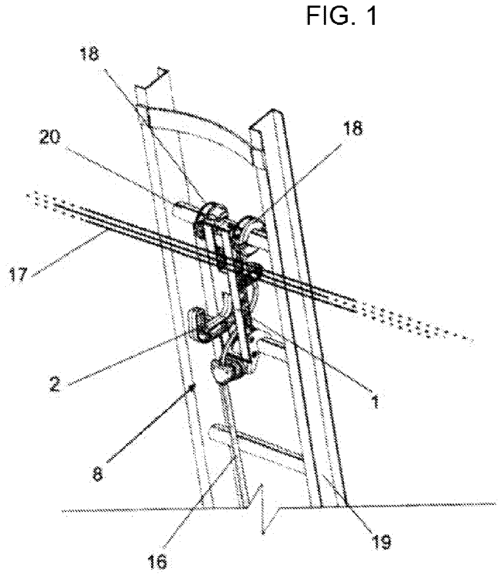

FIG. 1 - It depicts a front perspective view of a ladder provided with the hook for anchoring ladders to cables, with the hook open, supported on horizontal cables.

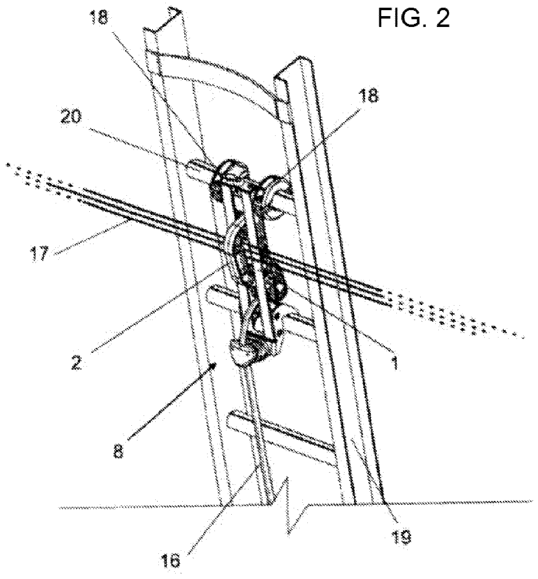

FIG. 2 - It depicts a front perspective view of a ladder provided with the hook for anchoring ladders to cables supported on horizontal cables with the hook closed.

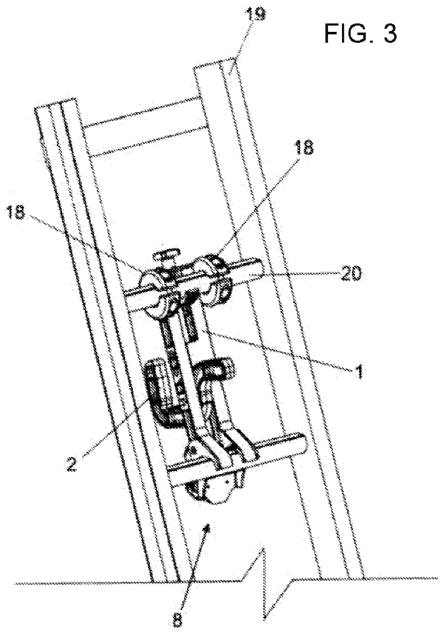

FIG. 3 - It depicts a rear perspective view of a ladder provided with the hook for anchoring ladders to cables with the hook open.

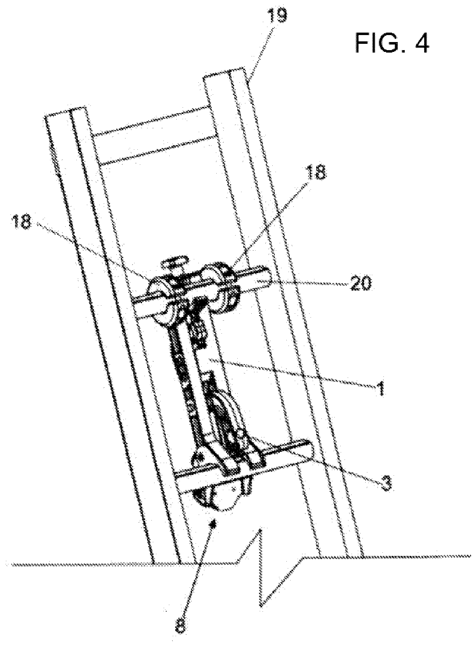

FIG. 4 - It depicts a rear perspective view of a ladder provided with the hook for anchoring ladders to cables with the hook closed.

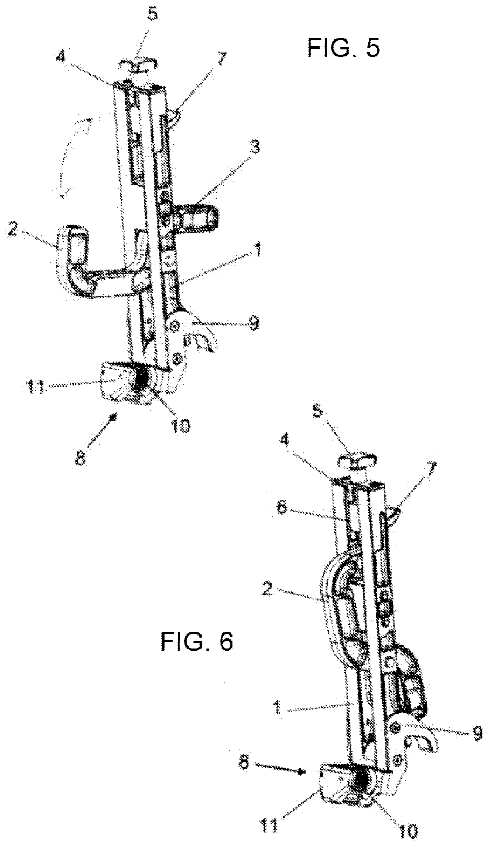

FIG. 5 - It depicts a side perspective view of the equipment provided with the hook for anchoring ladders to cables with the hook in the open position.
FIG. 6 - It depicts a side perspective view of the equipment provided with the hook for anchoring ladders to cables with the hook in the closed position.

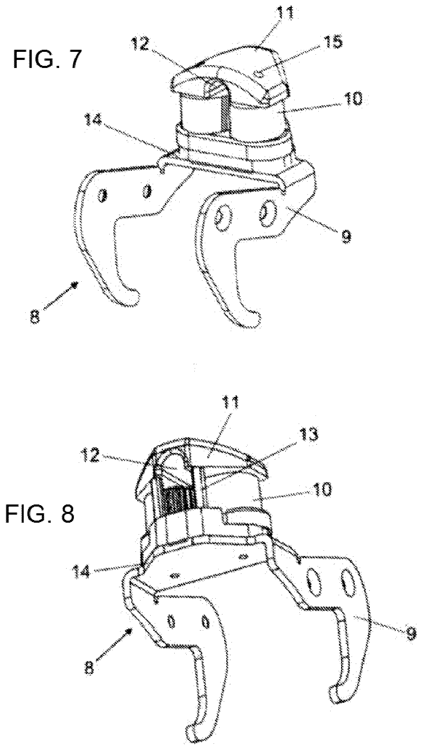

FIG. 7 - It depicts a side rear perspective view of the rope grip that integrates the equipment provided with the hook for anchoring ladders to cables.
FIG. 8 - It depicts a low front perspective view of the rope grip that integrates the equipment provided with the hook for anchoring ladders to cables.

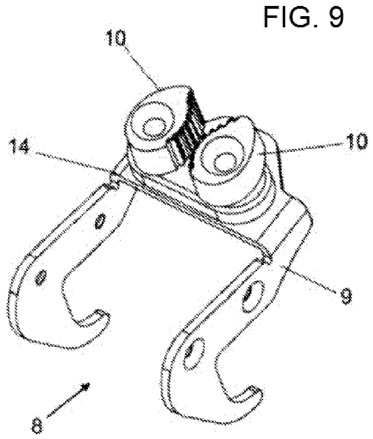

FIG. 9 - It depicts a low front perspective view of the rope grip, without the rope limiter, which integrates the equipment provided with the hook for anchoring ladders to cables where the semi-cylindrical gears can be observed.

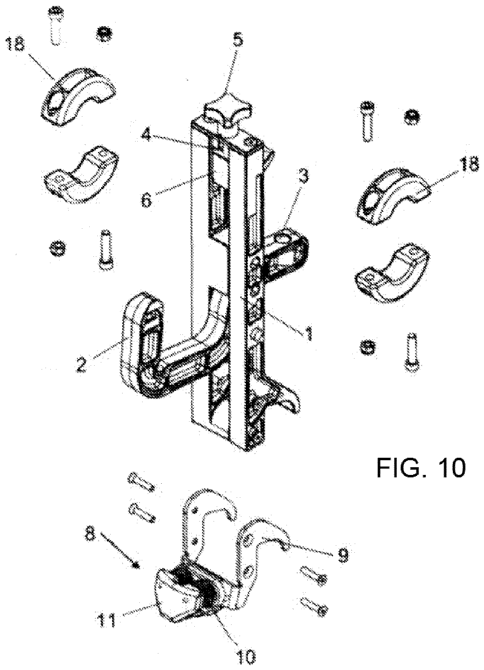

FIG. 10 - It depicts a side magnified perspective view of the equipment provided with the hook for anchoring ladders to cables.

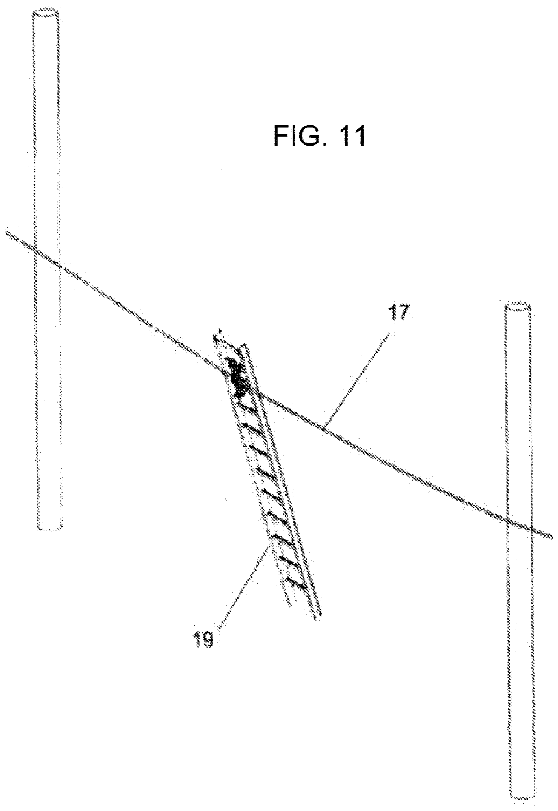

FIG. 11 - It depicts a front perspective view of a ladder provided with the hook for anchoring ladders to cables supported on horizontal cables.

### DETAILED DESCRIPTION OF THE INVENTION

In accordance with the above figures, the object of this invention, essentially consists of a main vertical frame (1) of prismatic rectangular geometry provided with a hinged hook (2) at its center, the rear end of which has an extension in which a through hole (3) is provided for attaching the rope (16).

The upper end of the main frame (1) has a longitudinal threaded shaft (4), provided with a handle (5) in the upper portion with a rectangular prismatic one-piece (6) coupled to said threaded shaft (4), which is attached to a rectangular opening in the upper portion of the main frame (1), with the one-piece (6) having on its rear face a concave surface (7) that tangentially embraces the bottom of the step.

At the lower end of the main frame (1), there is a rope grip (8) consisting laterally of an U-shaped support (9) which bears two semi-cylindrical elements (10) with grooved-like teeth positioned side by side, in which upper portions there is a rope limiting element (11) having at its center a half-round longitudinal recess (12) and two axes (13) which project perpendicularly downwardly in its rear portion and attach to holes of the same cross-section provided in the rear portion of the lower base (14) on which the semi-cylindrical elements (10) are mounted.

In the rope limiting element (11), through holes (15) matching the threaded holes are provided at the center of the semi-cylindrical elements (10), in which screws passing through the rope limiting element (11) are secured.

Said rope grip (8) locks the rope or ropes (16) which, in turn, lock the hook (2) by traction, preventing it from returning and releasing the cables (17) which support the service ladder (19). The rope (16) locking the hook (2) is threaded between the rope limiting element (11) and the semi-cylindrical elements (10) and is locked in the space between.

In the upper step (20), in which the upper portion of the main frame (1) is attached, and on each side of such main frame (1), two side latches (18) of toroidal geometry are provided.

Each of these side latches (18) is divided into two equal parts in semi-annular shapes and are installed in the ladder step (20) by means of screws and nuts.

The side latches (18) must be installed close to the main frame (1), so that it does not move sideways.

Incorporating the rope grip (8) and side latches (18) into the device provided with hook for anchoring ladders to cables increases safety substantially by addressing the drawbacks of such equipment.

It can be seen from the foregoing that the invention is characterized as a very useful equipment, presenting all the practical and functional qualities that fully justify the patent application.

## Claims

1. Arrangement consisting of
a main structure (1) of rectangular prismatic geometry provided at its center with an hinged hook (2) for anchoring a ladder to cables,
the rear end of the hook has an extension in which a through hole (3) is provided for attaching a rope (16),
whereas the upper end of the main structure (1) has a longitudinal threaded shaft (4), provided with a handle (5) in the upper portion with a rectangular prismatic one-piece (6) coupled to said threaded shaft (4),
said one-piece (6) has on its rear face a concave surface (7),
**characterized in that**
at the lower end of the main structure (1), there is a rope grip (8) consisting laterally of an inverted U-shaped support (9) which bears two semi-cylindrical elements (10) with grooved-like teeth positioned side by side,
in an upper portion there is a rope limiting element (11) having at the center of its lower face a half-round longitudinal recess (12) and two axes (13) which project perpendicularly downwardly in its rear portion and attach to holes of the same cross-section provided in the rear portion of a lower base (14) of said rope grip (8) on which the semi-cylindrical elements (10) are mounted, whereas in the rope limiting element (11), through holes (15) matching threaded holes being provided at the center of the semi-cylindrical elements (10), in which threaded holes screws passing through the rope limiting element (11) are secured,
while in the upper step (20), in which the upper portion of the main frame (1) is attached,
and on each side of such main structure (1), two side latches (18) of toroidal geometry are provided, with each of these side latches being divided into two equal parts in semi-annular shapes and being installable to a ladder step (20) by means of screws and nuts,
and by this the upper portion of the main structure (1) is attachable to a ladder step (20).

## Patentansprüche

1. Anordnung, bestehend aus
einer Hauptstruktur (1) mit rechteckiger prismatischer Geometrie, die in ihrer Mitte mit einem Scharnierhaken (2) zum Verankern einer Leiter an Kabeln bereitgestellt ist, wobei das hintere Ende des Hakens eine Verlängerung aufweist, in der ein Durchgangsloch (3) zum Befestigen eines Seils (16) bereitgestellt ist,
während das obere Ende der Hauptstruktur (1) einen Längsgewindeschaft (4) aufweist, der mit einem Griff (5) im oberen Abschnitt mit einem rechteckigen prismatischen Einteiler (6) bereitgestellt ist, der mit dem Gewindeschaft (4) gekoppelt ist,
wobei der Einteiler (6) auf seiner Rückseite eine konkave Oberfläche (7) aufweist,
**dadurch gekennzeichnet, dass**
sich am unteren Ende der Hauptstruktur (1) ein Seilgriff (8) befindet, der lateral aus einem umgekehrten U-förmigen Träger (9) besteht, der zwei halbzylindrische Elemente (10) mit gerillten Zähnen lagert,
die nebeneinander positioniert sind, der sich in einem oberen Abschnitt ein Seilbegrenzungselement (11) befindet, das in der Mitte seiner Unterseite eine halbrunde Längsaussparung (12) und zwei Achsen (13) aufweist, die im hinteren Abschnitt davon senkrecht nach unten vorstehen und an Löchern mit gleichem Querschnitt befestigt sind, die in dem hinteren Abschnitt einer unteren Basis (14) des Seilgriffs (8) bereitgestellt sind, an dem die halbzylindrischen Elemente (10) angebracht sind, während in dem Seilbegrenzungselement (11) Durchgangslöcher (15), die mit Gewindelöchern zusammenpassen, in der Mitte der halbzylindrischen Elemente (10) bereitgestellt sind, in denen Gewindelochschrauben, die durch das Seilbegrenzungselement (11) verlaufen,
befestigt sind, während in der oberen Sprosse (20), in welcher der obere Abschnitt des Hauptrahmens (1) befestigt ist,
und auf jeder Seite einer solchen Hauptstruktur (1) zwei Seitenschlaufen (18) mit Toroidgeometrie bereitgestellt sind, wobei jede dieser Seitenschlaufen in zwei gleiche Teile in halbringförmiger Form unterteilt ist und mittels Schrauben und Muttern an einer Leitersprosse (20) installiert werden kann,
und wodurch ein oberer Abschnitt der Hauptstruktur (1) an einer Leitersprosse (20) befestigt werden kann.

## Revendications

1. Agencement constitué
d'une structure principale (1) à géométrie prismatique rectangulaire pourvue en son centre d'un crochet articulé (2) pour l'ancrage d'une échelle à des câbles,
l'extrémité arrière du crochet a une extension dans laquelle un trou traversant (3) est prévu pour la fixation d'une corde (16),
tandis que l'extrémité supérieure de la structure principale (1) a un arbre fileté longitudinal (4), pourvu d'une poignée (5) dans la partie supérieure avec un monobloc prismatique rectangulaire (6) couplé audit arbre fileté (4),
ledit monobloc (6) a sur sa face arrière une surface concave (7),
**caractérisé en ce que**
à l'extrémité inférieure de la structure principale (1), il y a une prise de corde (8) constituée latéralement d'un support en forme de U inversé (9) qui porte deux éléments semi-cylindriques (10) avec des dents en forme de rainure positionnées côte à côte,
dans une partie supérieure il y a un élément de limitation de corde (11) ayant au centre de sa face inférieure un évidement longitudinal demi-rond (12) et deux axes (13) qui font saillie perpendiculairement vers le bas dans sa partie arrière et sont fixés aux trous de la même section transversale prévue dans la partie arrière d'une base inférieure (14) de ladite prise de corde (8) sur laquelle sont montés les éléments semi-cylindriques (10), tandis que dans l'élément de limitation de corde (11), des trous traversants (15) correspondant à des trous filetés étant prévus au centre des éléments semi-cylindriques (10), dans lesquels sont serrées des vis à trous filetés traversant l'élément de limitation de corde (11),
tandis que dans la marche supérieure (20), dans laquelle la partie supérieure du cadre principal (1) est fixée,
et de chaque côté de cette structure principale (1), deux verrous latéraux (18) à géométrie toroïdale sont prévus, avec chacun de ces verrous latéraux étant divisé en deux parties égales sous formes semi-annulaires et pouvant être installé sur un échelon (20) au moyen de vis et d'écrous,
et par cela, la partie supérieure de la structure principale (1) peut être fixée à un échelon (20).
